(19) Europäisches Patentamt European Patent Office Office européen des brevets

(11) **EP 4 668 048 A2**

(12) **EUROPEAN PATENT APPLICATION**

(43) Date of publication:
**24.12.2025 Bulletin 2025/52**

(21) Application number: **25212470.6**

(22) Date of filing: **30.10.2025**

(51) International Patent Classification (IPC):
**G06F 1/12** *(2006.01)* **G04R 20/02** *(2013.01)*
**G06F 1/14** *(2006.01)*

(52) Cooperative Patent Classification (CPC):
**G06F 1/14; G04G 7/00; G04R 20/02; G06F 1/12**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.05.2025 CN 202510681255**

(71) Applicant: **Apollo Intelligent Driving Technology (Beijing) Co., Ltd.**
**Haidian District**
**Beijing 100085 (CN)**

(72) Inventor: **ZHONG, Mingsen**
**Beijing, 100085 (CN)**

(74) Representative: **Richly & Ritschel Patentanwälte PartG mbB**
**Sattlerweg 20**
**51429 Bergisch Gladbach (DE)**

(54) **TIME SYNCHRONIZATION METHOD, APPARATUS AND TIME SYNCHRONIZATION SYSTEM FOR INTELLIGENT DRIVING SYSTEM**

(57) Provided are a time synchronization method, apparatus and time synchronization system of an intelligent driving system, relating to the technical fields of autonomous driving, electronic technology, and time synchronization. The method includes: obtaining (S210) a second-level universal time and a corresponding Pulse Per Second signal; based on a first local timestamp of a captured Pulse Per Second signal, a second local timestamp of an execution time instant of an interrupt service routine, and a first global timestamp, determining (S220) a second global timestamp corresponding to a predetermined edge of the Pulse Per Second signal; based on a global timestamp of a current time instant and the second global timestamp, obtaining (S230) a sub-second time of the current time instant; based on the second-level universal time and the sub-second time, obtaining (S240) an accurate time of the current time instant.

FIG. 2

**Description**

TECHNICAL FIELD

The present disclosure relates to a technical field of data processing, and in particular to the technical fields of autonomous driving, electronic technology, and time synchronization.

BACKGROUND

In recent years, new energy automobile industry has been thriving. Compared to traditional fuel vehicles, new energy automobiles are more electrified and smarter. Their hardware platforms are mostly multi-core heterogeneous system platforms with high computing power, complicated software and hardware systems, and various types of sensors, including ultrasonic radars, millimeter-wave radars, cameras, lidars, IMUs, and the like. The various sensors are connected to different cores. By merging sensing data of multiple sensors, the accuracy of identifying obstacles in different scenarios can be improved to ensure vehicle driving safety. Therefore, in the process of merging sensing data of multiple sensors, a baseline clock source is needed. Time synchronization devices are used to provide an accurate and uniform time source to various processors to ensure accuracy in merging sensing data of multiple sensors.

SUMMARY

Provided are a time synchronization method, apparatus, device, storage medium and a time synchronization system of an intelligent driving system.

According to a first aspect, provided is a time synchronization method, comprising:

obtaining a second-level universal time and a corresponding Pulse Per Second signal;

based on a first local timestamp of a captured Pulse Per Second signal, a second local timestamp of an execution time instant of an interrupt service routine, and a first global timestamp, determining a second global timestamp corresponding to a predetermined edge of the Pulse Per Second signal, wherein the interrupt service routine is triggered by the Pulse Per Second signal;

based on a global timestamp of a current time instant and the second global timestamp, obtaining a sub-second time of the current time instant;

based on the second-level universal time and the sub-second time, obtaining an accurate time of the current time instant.

According to another aspect, provided is a time synchronization system for an intelligent driving system, comprising:

a GPS module, configured to output a second-level universal time and a Pulse Per Second signal;

at least a safety domain processing unit, comprising:

a first processing core in communication with the GPS module, configured to receive the second-level universal time and the Pulse Per Second signal;

a GPIO pin associated with the first processing core, configured to have a hardware timestamp capturing function;

a hardware timer/register associated with the GPIO pin, configured to capture a first local timestamp at a predetermined edge of the Pulse Per Second signal;

the first processing core being configured to perform the time synchronization method provided by any one of the embodiments of the present disclosure to generate an accurate second global timestamp and/or accurate time.

According to another aspect, provided is a time synchronization apparatus, comprising:

an obtaining module, configured to obtain a second-level universal time and a corresponding Pulse Per Second signal;

a first determining module, configured to, based on a first local timestamp of a captured Pulse Per Second signal, a second local timestamp of an execution time instant of an interrupt service routine, and a first global timestamp, determine a second global timestamp corresponding to a predetermined edge of the Pulse Per Second signal, wherein the interrupt service routine is triggered by the Pulse Per Second signal;

a second determining module, configured to, based on a global timestamp of a current time instant and the second global timestamp, obtain a sub-second time of the current time instant;

a combining module, configured to, based on the second-level universal time and the sub-second time, obtain an accurate time of the current time instant.

According to another aspect, provided is an electronic device, comprising:

at least one processor; and

a memory communicatively connected to the at least one processor;

wherein the memory stores an instruction executable by the at least one processor, and the instruction is executed by the at least one processor to cause the at least one processor to perform the method provided by any one of the embodiments of the present disclosure.

According to another aspect, provided is a non-transitory computer-readable storage medium storing a computer instruction, wherein the computer instruction is used to cause a computer to perform the method provided by any one of the embodiments of the present disclosure.

According to another aspect, provided is a computer program product comprising a computer program, which, when executed by a processor, performs the method provided by any one of the embodiments of the present disclosure.

The present disclosure can improve the precision of a global timestamp and provide a universal time with high precision.

It should be understood that the content described in this section is not intended to identify key or essential features of the present disclosure, nor to limit the scope of the present disclosure. Other features of the present disclosure will become apparent from the following description.

BRIEF DESCRIPTION OF THE DRAWINGS

The accompanying drawings are used to better understand the present solution, and do not constitute a limitation to the present disclosure.

FIG. 1 is a schematic diagram of a hardware architecture of an intelligent driving system according to an embodiment of the present disclosure;
FIG. 2 is a schematic flow chart of a time synchronization method according to an embodiment of the present disclosure;
FIG. 3 is a schematic diagram of a relationship between a PPS pulse time instant and an ISR interrupt service time instant according to an embodiment of the present disclosure;
FIG. 4 is a schematic structural diagram of a time synchronization system of an intelligent driving system according to an embodiment of the present disclosure;
FIG. 5 is a schematic structural diagram of a time synchronization apparatus according to an embodiment of the present disclosure;
FIG. 6 is a relational graph of the temperature drift of an oscillator according to an embodiment of the present disclosure;
FIG. 7 is a diagram of the temperature deviation of a sub-second time after modification according to an embodiment of the present disclosure;
FIG. 8 is a block diagram of an electronic device used to perform a time synchronization method according to embodiments of the present disclosure.

DETAILED DESCRIPTION

The following describes exemplary embodiments of the present disclosure with reference to the accompanying drawings, where various details of the embodiments of the present disclosure are included to facilitate understanding, and should be considered as merely exemplary. Therefore, those of ordinary skill in the art should realize that various changes and modifications can be made to the embodiments described herein without departing from the scope of the present disclosure. Likewise, for clarity and conciseness, descriptions of well-known functions and structures are omitted in the following description.

In the relevant art, common solutions for time synchronization devices include:

1. Using the Precision Time Protocol (PTP). A PTP network is referred to as a PTP domain. There is one and only one synchronization clock in a PTP domain. All devices in the domain are maintained synchronized with the clock.

2. Using the generalized Precision Time Protocol (gPTP), the full name of which is Precision Clock Synchronization Protocol for Networked Measurement and Control Systems, and which is mainly used for clock synchronization of various nodes in Ethernet and distributed networks.

The problems and drawbacks caused by the above solutions include: to obtain timestamps, they must be based on Ethernet communication, and the MAC layer must support timestamp acquisition. Each CPU must have an Ethernet interface, resulting in high costs. PTP and gPTP need a certain communication bandwidth and CPU usage. Low-end CPUs do not meet their needs. gPTP modules need to be used, which increases software costs.

In order to at least partially solve the above problems and one or more problems in other potential problems, embodiments of the present disclosure provide a time synchronization method and apparatus, and a time synchronization system for an intelligent driving system. With the technical solutions of the embodiments of the present disclosure, a more accurate time source can be provided to an intelligent driving system without increasing hardware costs.

In order to better understand the time synchronization method provided by the present invention and the advantages thereof, description is made in combination with an exemplary hardware architecture of an intelligent driving system. It should be understood that this is only one possible implementation and is not intended to limit the scope of the present invention.

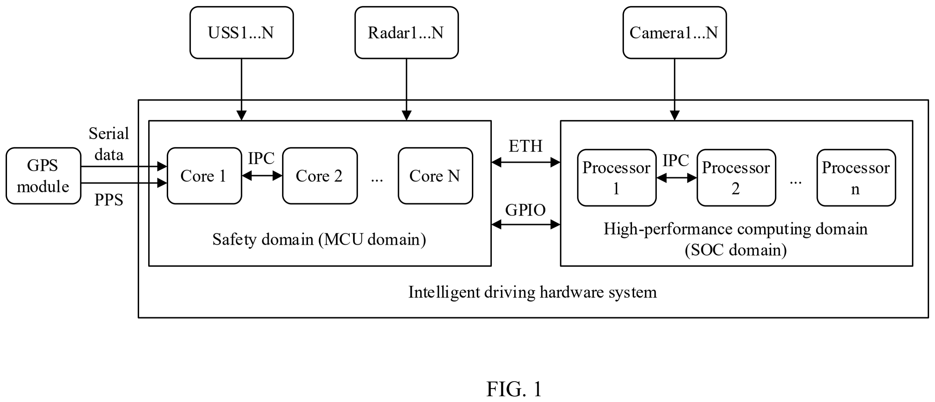

Refer to FIG. 1, which illustrates a typical hardware architecture of an intelligent driving system supporting a time synchronization method of embodiments of the present disclosure. The architecture primarily comprises a Global Positioning System GPS module, a safety domain processing unit and a high-performance computing domain processing unit. The safety domain processing unit normally is a Microcontroller Unit MCU, the high-performance computing domain processing unit is a System on Chip SOC.

GPS module: as an external time baseline source of the system. The GPS module is connected to the safety domain processing unit by means of a serial interface, such as Universal Asynchronous Receiver/Transmitter UART, to transmit data containing second-level time information. The GPS module is connected to the safety domain processing unit by means of a pulse signal interface, such as General Purpose Input/Output GPIO interface, to transmit a Pulse Per Second PPS signal.

The safety domain processing unit:
Typically uses a multi-core microcontroller that complies with Automotive Safety Integrity Level or Classification standards for automated driving. It is responsible for carrying out key tasks, including body control, preliminary processing of sensor data, network management (such as CAN/LIN/Ethernet gateway), power management and diagnosis.

Connection with GPS module: one specified core within the MCU (for example, Core 1 shown in FIG. 1) receives a GPS data packet/message by means of its serial interface, and receives a PPS signal by means of its GPIO pin.

Internal communication: multiple cores of the MCU exchange data and control information by means of Inter-Process Communication IPC mechanism (such as shared memory and message queue).

Connection to high-performance computing domain: the MCN is connected to the high-performance computing domain by means of an Ethernet interface, to transmit vehicle status information, preliminary processed sensor data and information related to time synchronization.

high-performance computing domain processing unit (SOC):
Typically uses a multi-core heterogeneous system on chip with high computing power, which can integrate CPU, GPU, AI NPU or the like. It primarily executes complex sensing, merging, positioning, planning and controlling algorithms.

Connection to the safety domain: the SOC is connected to the MCU of the safety domain by means of its Ethernet interface, to receive data and instructions from the safety domain and return computing results or status. The time synchronization information is also primarily obtained by this link. The SOC can also be connected to any core of the MCU by means of GPIO.

Internal processing: each processing unit in SOC (such as CPU, GPU, NPU or the like) needs to operate in coordination, therefore relying heavily on an accurate and uniform time baseline.

In the above layered heterogeneous hardware architecture, although requirements on function safety and performance are satisfied, multiple independent computing units (such as MCU cores, SOC cores, NPU or the like) exist in the system memory, which have their individual local clock and communicate through different interfaces. In order to ensure the consistency and accuracy of various data requiring a timestamp in the whole system, it is critical to realize a time synchronization with high accuracy across domains and across cores.

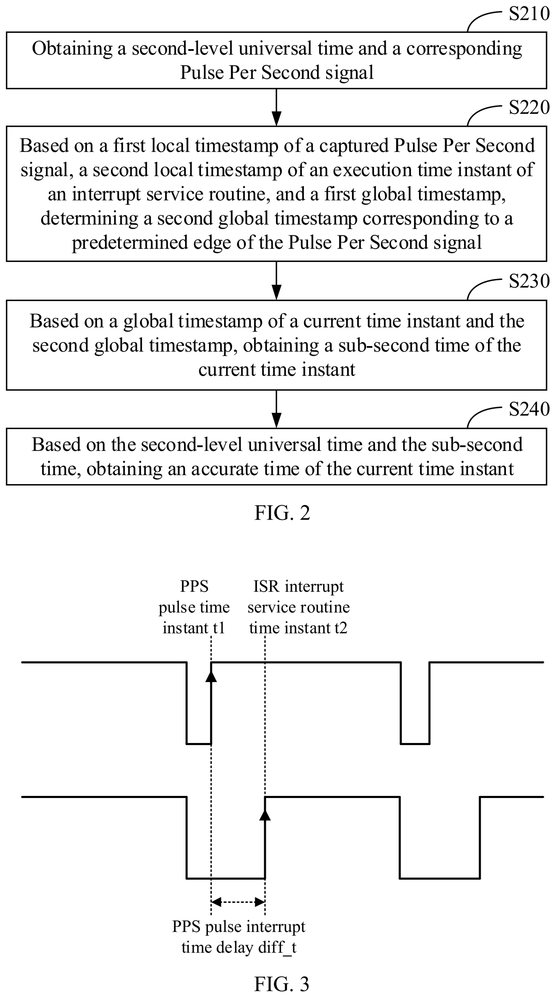

FIG. 2 is a schematic flow chart of a time synchronization method according to an embodiment of the present disclosure. As shown in FIG. 2, the method at least comprises the following steps:

S210: obtaining a second-level universal time and a corresponding Pulse Per Second signal.

In an embodiment of the present disclosure, a time synchronization system implementing the time synchronization method can be deployed in a time synchronization module on a safety domain microcontroller MCU in an intelligent driving system. The time synchronization system needs to obtain basic clock information from an authoritative external clock source.

Second-level universal time refers to coarse time information of Coordinated Universal Time UTC, with precision to the "second" level, for example it contains current year, month, date, hour, minute and second. In the embodiment, this information can come from a GPS module connected to an MCU by means of a serial interface (such as UART) and be obtained by parsing a data packet/message output by the GPS. This second-level time is referred to as utc_s. utc_s will be updated according to a GPS packet/message after the arrival of every PPS signal.

Corresponding Pulse Per Second signal: it refers to a physical electrical signal output by a same external clock source. The pulse signal is output at a fixed interval and can be a pulse signal output every second, therefore it is called Pulse Per Second signal. A specific edge of the Pulse Per Second signal (for example a rising edge, that is "a predetermined edge") accurately marks a start time instant of every UTC integer second. In the case that the clock source is a GPS module, after the GPS module receives a GPS satellite broadcast message, the GPS module obtains the time information in the broadcast message, processes the obtained information to generate a PPS signal and a data packet/message containing the second-level universal time, and sends the PPS and the data packet/message to the time synchronization module.

It should be noted that the time information generation and output mechanism of the GPS module comprises:

I. The generation and output of the second-level universal time (utc_s):

Current GPS time information (for example in the form of Week Number and Week Internal Second) is contained in a navigation message broadcast by the GPS satellite. By receiving signals from multiple GPS satellites, a GPS receiver module installed in the intelligent driving system can not only calculate its own position but also accurately synchronize its internal local clock to the GPS time. Once the internal clock of the GPS module is aligned with the GPS time, it can calculate current UTC time and extracts information about the year, month, day, hour, minute, second. This information is formatted into standard data packets/messages (such as RMC, GGA, or ZDA sentences in the NMEA 0183 protocol). These data packets/messages, which contain second-level UTC time (utc_s), are asynchronously sent to the connected main processor (such as the safety domain MCU in the present disclosure) through the serial communication interface (e.g., UART) of the GPS module.

It should be noted that the transmission of serial data takes a certain amount of time and is usually completed after the actual start of a corresponding UTC second. Therefore, the utc_s data can be understood as a current or a most recently elapsed integer second time instant.

II. Generation and output of Pulse Per Second signal:

The GPS module uses its internal high-precision clock, which has been accurately synchronized to GPS time (and thus knows UTC time).

The hardware logic within the module is configured such that when its internal clock indicates that the UTC time has just reached an edge of an integer second (for example, at the time instant when the second changes from 14 to 15), an accurate voltage transition (for example, a rising edge transitioning from low level to high level) is generated on a dedicated physical pin (PPS output pin). This voltage transition serves as the PPS signal. Since it is generated directly by hardware based on the accurately synchronized internal clock of the module, its edge (rising edge or falling edge, depending on the module design) exhibits very high timing accuracy and stability (low jitter), reaching the nanosecond level. It constitutes a physical marker for a UTC integer second time instant.

It can be seen that the utc_s and the PPS signal are two types of time information generated by the GPS module based on a same internal UTC time reference, which are interrelated but have different output formats. The physical time instant when the predetermined edge (such as the rising edge) of the PPS signal occurs accurately corresponds to the start time instant of the UTC integer second indicated in the utc_s data packet/message. For example, when the utc_s data indicates that the time is about to change or has just changed to "10:30:15", an effective pulse edge will be generated simultaneously (within the physical precision range) on the PPS output pin. utc_s provides an absolute numerical label for time (year, month, day, hour, minute, second), but the time that reaches the main processor through serial port transmission is relatively inaccurate. The PPS signal provides an accurate physical marker (pulse edge) for the integer second time instant, but it does not itself contain information about which second it is.

S220: based on a first local timestamp of a captured Pulse Per Second signal, a second local timestamp of an execution time instant of an interrupt service routine, and a first global timestamp, determining a second global timestamp corresponding to a predetermined edge of the Pulse Per Second signal, wherein the interrupt service routine is triggered by the Pulse Per Second signal.

In an embodiment of the present disclosure, since the PPS signal itself does not contain information about which second it is, to obtain the global timestamp of the time instant (t1) when the PPS pulse physically arrives at the synchronization system (such as a GPIO pin of the MCU), it is required to execute an interrupt service routine through software. However, there is a delay in the execution of the interrupt service routine by the software system, causing the execution time instant (t2) of the interrupt service routine to lag behind t1. As shown in FIG. 3, the delay between t1 and t2 is referred to as diff_t.

First local timestamp: when the predetermined edge of the PPS signal arrives at a GPIO pin, a hardware timestamp capture function associated with the GPIO pin almost instantaneously latches a value of a local hardware timer at that time instant into a register, obtaining a first local timestamp tcar. It represents an accurate mapping of time instant t1 in the local time coordinate system of the MCU. This capture process is directly completed by hardware, with extremely low latency (typically in the nanosecond or even picosecond range), and tcar can be considered to accurately record the local time at time instant t1.

Interrupt Service Routine (ISR): The predetermined edge of the PPS signal at time instant t1 not only triggers the hardware to capture tcar, but also issues an interrupt request to a core of the MCU. Due to factors such as operating system scheduling, CPU status, and interrupt priority, the actual time instant when the CPU responds to the interrupt request and starts executing the ISR code will be later than t1. The time instant when the Interrupt Service Routine starts execution is defined as t2.

Second local timestamp: At time instant t2, a current count value of a local high-precision timer of the MCU is read through software instructions in the ISR code to obtain a second local timestamp, denoted as tcrr.

First global timestamp: Also at time instant t2, a current value of a high-precision global time counter maintained by the system is read through software instructions in the ISR code, obtaining a first global timestamp, denoted as gtc_isr_now. The first global timestamp aims to track UTC time as accurately as possible, with nanosecond resolution.

Second global timestamp: with the three timestamps tcar, tcrr, and gtc_isr_now, the system can calculate an accurate delay from the physical event t1 to the software response t2 (primarily reflected by tcrr-tcar). Then, by subtracting this delay from the global time gtc_isr_now at time instant t2, the global timestamp actually corresponding to time instant t1 (i.e., the predetermined edge time instant of the PPS signal) can be deduced. This final calculated global timestamp, accurately aligned to the start time instant of a UTC integer second, is a second global timestamp, denoted as gtc_pps.

S230: based on a global timestamp of a current time instant and the second global timestamp, obtaining a sub-second time of the current time instant.

In an embodiment of the present disclosure, after determining the accurate global timestamp gtc_pps starting from the current second, this step aims to calculate the number of nanoseconds that have elapsed within the current second at any given time instant.

The current time instant refers to any time point between two consecutive PPS signals (i.e., within one second).

The global timestamp at the current time instant refers to a value of the continuously running high-precision global time counter read by the system at the current time instant, resulting in gtc_now.

By calculating the difference of gtc_pps and gtc_now (i.e., gtc_now - gtc_pps), a sub-second time is obtained as an accurate amount of time that has elapsed from the start of the current second to the current time instant, typically measured in nanoseconds. This difference is referred to as the sub-second time at the current time instant, denoted as utc_ns. It represents the "sub-second" or "decimal part" of the current time within one second.

S240: based on the second-level universal time and the sub-second time, obtaining an accurate time of the current time instant.

In an embodiment of the present disclosure, a coarse integer-second time and a precise sub-second time are combined to form a complete and high-precision representation of the current time.

The precise time at the current time instant is obtained by combining utc_s and utc_ns, resulting in a complete and high-precision UTC time representation, denoted as utc. For example, a utc value may be represented as "2023-10-27 10:30:15 +500,123,456 nanoseconds". This final utc timestamp possesses high precision and accuracy, and can be utilized by various application modules within the intelligent driving system that require accurate time information, such as sensor fusion, logging, planning control, and so on.

According to the solution of the embodiment of the present disclosure, it can effectively combine the authoritative time and the precise edge of a PPS signal, and use hardware timestamps and software delay compensation techniques to calculate sub-second time, thereby generating and maintaining a high-precision time reference synchronized with UTC. This can provide an accurate time source for intelligent driving systems.

It should be noted that during the process from t1 to t2: when the predetermined edge of the PPS signal arrives and the GPIO hardware detects the edge change, it needs to send an interrupt request signal to the interrupt controller of the MCU. This process may have a slight hardware delay and may need to be synchronized with the internal clock of the MCU. After receiving the request, the interrupt controller needs to make a decision. If there is an interrupt with higher priority being processed at that time, or the CPU is executing an uninterruptible instruction, then the interrupt request caused by the PPS needs to be queued and waited for. This is an important and potentially variable source of delay.

When the CPU becomes idle and decides to respond to this PPS interrupt, multiple clock cycles may have already elapsed. Subsequently, the CPU fetches an interrupt vector and searches an interrupt vector table for an entry address of the Interrupt Service Routine (ISR) corresponding to the interrupt, thereby jumping to the ISR. The address of the ISR is loaded into a program counter, and instructions of the ISR are executed. The time instant when the ISR starts executing, which is time instant t2, is the time instant of the software event.

ISR code contains an instruction to obtain tcrr and gtc_isr_now, which starts to be executed by the CPU. As a result, the software reads a current local hardware timer value to obtain tcrr, and reads the global timestamp to obtain the first global timestamp gtc_isr_now.

gtc_isr_now represents a value of a global time counter currently maintained by the system at the time instant of execution of the interrupt service routine (ISR) (at time t2).

It should be understood that the MCU typically contains one (or multiple) high-precision, continuously running hardware timers/counters. The counter is driven by a local crystal oscillator, which can be driven by a high-frequency crystal oscillator onboard the MCU. This means that its original precision and stability depend on this crystal oscillator.

Once the counter is initiated, it will continuously increment the count value based on the frequency of the crystal oscillator. It can be configured to achieve very high resolution (for example, with a frequency of 250MHz, corresponding to a resolution of 4ns).

Thus, the continuously running counter can be regarded as the system time or time reference within the MCU. Various tasks and events in the system can obtain a high-precision timestamp by reading the current value of the counter.

So, the process of obtaining gtc_isr_now is as follows:

Triggering interrupt: The edge of the PPS signal triggers an interrupt request.

System response: After a delay (of duration diff_t), the CPU responds to the interrupt and starts executing an interrupt service routine (ISR) written for the PPS interrupt. This time instant is t2.

Software reading: Inside the ISR code, there is an instruction that directly reads the current value of the continuously running high-precision hardware counter.

Value assignment: The value read is assigned to the variable gtc_isr_now.

It should also be noted that in many implementations of MCU, the local timestamp functions used for tcar and tcrr, as well as the global time counter used for gtc_isr_now and gtc_now, can ultimately originate from a same underlying high-frequency hardware counter module.

tcar represents the value of the counter automatically captured by hardware at time instant t1. tcrr represents the value of the counter read by software at time instant t2. Similarly, gtc_isr_now represents the value of the counter read by software at time instant t2. Based on tcar and tcrr, a time difference diff_t between time instant t1 and time instant t2 can be determined. This time difference can then be used to further deduce the global timestamp at time instant t1, which is the second global timestamp.

By combining hardware and software, the time stamp of the physical edge arrival time instant of the PPS signal (i.e., the start time instant of a UTC integer second) in a high-precision time coordinate system within the system can be determined extremely accurately, thereby eliminating errors caused by system processing delay.

Every second when a new PPS pulse arrives, a new gtc_pps is calculated by repeating the aforementioned steps S210 to S240. This is equivalent to periodically calibrating a global time counter driven by a high-resolution but potentially drifting local clock using the PPS signal of the global time, to prevent error accumulation.

It can be seen that in the solution provided by the above embodiments, global time is used to provide "anchors" and long-term accuracy, utc_s provides the "integer part" of time, and the PPS signal provides an accurate physical marker at the beginning of each second. Between two PPS pulses (i.e., within one second), the system relies on the stable counting of the local clock to provide nanosecond-level time resolution.

In one possible implementation, the step S210 of obtaining a second-level universal time and a corresponding Pulse Per Second signal, further comprises the following steps:

S211: obtaining a serial data packet/message by means of a serial interface connected to a clock source, the serial data packet/message containing the second-level universal time.

S212: obtaining a Pulse Per Second signal by means of a GPIO pin connected to the clock source.

In an embodiment of the present disclosure, the clock source can be a GPS module, and the processing unit is a microcontroller (MCU) in the safety domain of the intelligent driving system. The MCU continuously receives serial data streams sent from the GPS module through its internal UART controller. The GPS module encapsulates the UTC time information obtained through internal calculations into specific serial data packets/messages according to a predetermined protocol format (such as the industry-standard NMEA 0183 protocol) and sends them out.

The software on the MCU (such as the task or driver specifically handling GPS data) is responsible for receiving, buffering, and parsing these serial data packets/messages. The parsing process aims to extract fields representing the current UTC time from sentences in the received packets/messages, including year, month, day, hour, minute, and second. The obtained UTC time information through parsing, precise to the second level, is referred to as second-level UTC (utc_s). The MCU will store the utc_s value and typically update it upon the arrival of a new GPS packet/message.

A dedicated Pulse Per Second output pin of the GPS module is connected to a general-purpose input/output (GPIO) pin of the MCU. When the internal clock of the GPS module indicates UTC time arrives an edge of an integer second, it generates a voltage pulse on its PPS output pin. The effective edge of the pulse is highly synchronized with the start time instant of an integer second of UTC, achieving a time accuracy much higher than that achievable through serial data transmission.

GPIO peripheral hardware of the MCU is configured to automatically detect a predetermined edge event occurring on the connected pin. When the rising edge of the PPS signal output by the GPS module reaches the GPIO pin, the MCU hardware (usually the GPIO controller combined with an input capture unit of an interrupt controller or timer module) will immediately recognize this event. Thus, a Pulse Per Second signal is obtained, and the edge event detected by the hardware will serve as a starting point for subsequent high-precision timestamp operations and interrupt triggering. It provides an accurate physical time anchor that all subsequent precise time calculations rely on.

According to the solution presented in the embodiments of the present disclosure, two complementary types of time information can be obtained from the clock source: second-level Universal Time (UTC_s) obtained through serial data packets/messages, which identifies which second it is, and an valid edge event of a Pulse Per Second signal detected through a GPIO pin, which precisely marks the start time instant of each second. These two types of information together form the basis for subsequent high-precision time synchronization calculations.

In a possible implementation, the step S220 of based on a first local timestamp of a captured Pulse Per Second signal, a second local timestamp of an execution time instant of an interrupt service routine, and a first global timestamp, determining a second global timestamp corresponding to a predetermined edge of the Pulse Per Second signal, at least comprises the following steps:
S221: based on a count value of a local counter at the time of a predetermined edge of the captured Pulse Per Second signal, obtaining the first local timestamp.

In an embodiment of the present disclosure, when the predetermined edge (corresponding to physical time instant t1) of the Pulse Per Second signal arrives at the configured GPIO pin, the current count value of the associated local high-precision hardware timer/counter will be automatically and quickly latched by the hardware into a specific register.

S222: based on an execution time instant of an interrupt service routine triggered by the Pulse Per Second signal, obtaining the second local timestamp and the first global timestamp.

While the hardware captures the predetermined edge of the Pulse Per Second signal in a triggering step S221, it also sends an interrupt request to the processing unit.

The processing unit responds to the interrupt request and, after experiencing an inherent interrupt processing delay of the system, begins executing the interrupt service routine (ISR) written for the interrupt event. The time instant when the ISR starts executing is denoted as t2. The time instant t2 is usually later than t1.

During the execution of the ISR code, the current count value of the local high-precision hardware timer/counter associated with the GPIO pin is read through software instructions. The count value read is the second local timestamp, denoted as tcrr. tcrr represents the local time value at time instant t2.

Meanwhile, the current value of the high-precision global time counter (Global Time Counter, GTC) maintained by the software instruction reading system, which is designed to track global time, is the first global timestamp, denoted as gtc_isr_now. gtc_isr_now represents the timestamp in the system's global time coordinate system at time instant t2.

S223: based on a time difference between the first global timestamp and the first local timestamp, and the second local timestamp, determining the second global timestamp corresponding to the predetermined edge of the Pulse Per Second signal.

The time difference between the first local timestamp (tcar) and the second local timestamp (tcrr) is calculated, denoted as diff_t. This time difference diff_t reflects a local time interval elapsed from the time instant t1 when the edge of the PPS signal is accurately captured by the hardware to the time instant t2 when the ISR starts executing and the software reads the timestamp. The calculation formula is diff_t=tcrr-tcar.

Then, based on the first global timestamp (gtc_isr_now) and the time difference (diff_t), the second global timestamp that accurately corresponds to the predetermined edge of the Pulse Per Second signal can be calculated.

According to the solution of the embodiments of the present disclosure, when each Pulse Per Second signal arrives, a corresponding timestamp gtc_pps of that accurate physical time instant in a nanosecond-level global time coordinate system can be determined with extremely high precision, facilitating further calculation to obtain the sub-second time.

It should be noted that a dedicated 64-bit free-running counter is typically maintained as a Global Time Counter (GTC). The bit width of gtc_isr_now can be 64 bits, while the bit width of tcrr and tcar can be 32 bits. When a 64-bit counter operates with nanosecond resolution (e.g., 4ns), its wrap-around period is approximately 2338 years ($2^{64}*4$ ns). This extremely long period means that gtc_isr_now can be regarded as a non-wraparound, monotonically increasing absolute time value throughout the life cycle of any practical system. This is crucial for establishing a stable and reliable global time reference.

In a possible implementation, the step of S223 of based on a time difference between the first global timestamp and the first local timestamp, and the second local timestamp, determining a second global timestamp corresponding to the predetermined edge of the Pulse Per Second signal, at least comprises the following steps:

based on a difference between the first local timestamp and the second local timestamp, obtaining a time difference.

obtaining a second global timestamp corresponding to the predetermined edge of the Pulse Per Second signal by deducting the time difference from the first global time stamp.

In an embodiment of the present disclosure, the first global timestamp (gtc_isr_now) obtained at the ISR execution time instant t2 is used as a reference point, and the time difference (diff_t) just calculated is subtracted therefrom, that is, gtc_pps=gtc_isr_now-diff_t. The calculation result is the second global timestamp that accurately corresponds to the predetermined edge of the Pulse Per Second signal.

According to the solution of the embodiment of the present disclosure, by subtracting the delay diff_t accurately measured by the local timestamp from the first global timestamp, the obtained gtc_pps value effectively traces the global time at time instant t2 back to time instant t1, thereby eliminating errors caused by interrupt delay and obtaining a high-accuracy timestamp under the system's global time coordinate system at the start time instant of a UTC integer second.

In a possible implementation, the second-level universal time and the second global timestamp are updated with the arrival of each Pulse Per Second signal.

In an embodiment of the present disclosure, the processing unit (such as MCU core 1) is configured to periodically execute a time synchronization update loop. This loop is triggered by each received Pulse Per Second signal. In each loop, the processing unit first performs steps S221-S223 to calculate a latest second global timestamp (gtc_pps) corresponding to a current Pulse Per Second signal. Simultaneously or immediately thereafter, the processing unit parses a latest serial data packet/message received from the GPS module to obtain a latest second-level universal time (utc_s) corresponding to the Pulse Per Second. These two newly calculated and obtained time values (utc_s and gtc_pps) are then used to update the corresponding time reference value stored internally in the system, replacing the value from the previous second.

According to the solution of the embodiments of the present disclosure, by forcing an update whenever a PPS signal arrives, it ensures that the system's global time reference (gtc_pps) can closely track the edge of a UTC second of an external authoritative time source. This effectively compensates for any drift that may have occurred in the system's internal clock during the previous second, while ensuring that the "time tag" (utc_s) remains synchronized with the accurate time instant (gtc_pps) at all times. Consequently, this maintains high precision and accuracy of the entire system's time.

In a possible implementation, the predetermined edge of the Pulse Per Second signal is a rising edge.

In an embodiment of the present disclosure, the GPIO peripheral of the processing unit (such as an MCU) and the associated interrupt controller/timer input capture unit are explicitly configured to respond only to voltage transitions from low to high (i.e., rising edge) events occurring on the connected GPIO pins. The hardware is set to ignore falling edges or other level changes.

According to the solution of the embodiments of the present application, the rising edge is explicitly designated as the triggering event, ensuring that the time synchronization process always occurs at a deterministic time instant relative to the edge of the UTC second, thereby guaranteeing the stability and repeatability of synchronization.

In a possible implementation, the time units for the first local timestamp, the second local timestamp, the first global timestamp, the second global timestamp, the global timestamp of the current time instant, and sub-second time are nanoseconds.

In an embodiment of the present disclosure, the hardware timers/counters within the processing unit (such as an MCU) used to generate local timestamps (tcar, tcrr) and global timestamps (gtc_isr_now, gtc_pps, gtc_now) are driven by a high-frequency on-board crystal oscillator (e.g., 250 MHz). After reading the raw count values of these hardware counters, the software uses the known crystal oscillator frequency (or period, e.g., 250 MHz corresponds to 4 nanoseconds per tick) to convert the raw count values into values in nanoseconds (ns) through multiplication or division operations. All subsequent time calculations are based on these nanosecond values.

According to the solution of the embodiments of the present disclosure, nanoseconds are adopted as a unified time unit, providing the system with extremely high time resolution. This high resolution is crucial for precisely measuring and compensating for minor system delays (such as interrupt delay diff_t), as well as providing sufficiently refined timestamps for intelligent driving applications (such as high-frequency multi-sensor data fusion, precise event sequencing, and control command issuance), thereby satisfying the stringent requirements for time precision in advanced intelligent driving functions.

In a possible implementation, the clock source is a GPS module or a microcontroller.

In an embodiment of the present disclosure, within the architecture depicted in FIG. 1, the GPS module is connected to Core 1 of the MCU domain, with the MCU domain using the GPS module as its clock source. The SOC domain is connected to the MCU domain via ETH and GPIO, and can use any microcontroller within the MCU domain as its clock source. In other words, the high-performance computing domain processing unit (such as an SOC processor) of the intelligent driving system can achieve high-accuracy time synchronization without directly connecting to an external clock source (such as GPS), but instead using the safety domain processing unit (such as the MCU) as its reference clock source. The following provides a detailed step-by-step description of this implementation method:

> 1. Obtaining time synchronization information (coarse synchronization and reference transfer) from the MCU:
> SOC establishes a communication connection with the safety domain MCU through its Ethernet interface.

The MCU periodically (for example, every second or on demand) encapsulates its internally maintained second-level world time (utc_s) that has been synchronized with high accuracy, and the second global timestamp (gtc_pps) (i.e., the precise global timestamp at the start time instant of a UTC integer second), into a specific data packet or message.

The MCU sends the time information, including utc_s and gtc_pps, to the SOC via Ethernet.

The software on the SOC is responsible for receiving and parsing the time information from the MCU. This provides the SOC with a coarse time reference, allowing it to know the current UTC second and the accurate start time instant measured by the MCU side of the previous second.

2. Obtaining an accurate time synchronization physical signal:
To achieve high-precision alignment, in addition to transmitting time values over Ethernet, an accurate physical time-stamp signal is also required to be transmitted from the MCU's time domain to the SOC. The edge of this signal needs to be associated with the gtc_pps time instant of the MCU or its derived accurate time point. This can be achieved in the following ways:
PPS signal forwarding: The MCU will connect the original PPS signal received from the GPS, or the PPS signal regenerated based on its internal accurate time reference, to a GPIO input pin of the SOC through a GPIO output pin of the MCU.

PTP event signal: If the PTP protocol is used, the protocol stack can drive a GPIO pin to generate an edge event at a critical time instant when a specific synchronization message is sent or received. This event is accurately correlated in time with the PTP timestamp. This GPIO signal is also connected to the corresponding GPIO input pin of the SOC.

Other synchronization signals: The MCU can drive a GPIO output at the gtc_pps time instant or a fixed offset time instant according to its internal logic, generating a customized synchronization signal that is transmitted to the SOC.

To achieve high-accuracy alignment of SOC and MCU time references, in addition to transmitting time values (utc_s, gtc_pps) over Ethernet, an accurate physical time stamp signal needs to be transmitted from the MCU to the SOC. The predetermined edge (e.g., rising edge) of this signal needs to be accurately correlated with the synchronized time reference inside the MCU. In a different embodiment of the present disclosure, the physical signal can be generated and transmitted through one of the following methods:

Method 1: a PPS signal of GPS relayed by MCU

In this method, the MCU forwards a raw PPS signal received from the GPS module either directly or after minimal processing, through another GPIO pin of the MCU that is configured in output mode. This pin is then connected to a GPIO pin of the SOC that is configured in input mode.

This method directly transmits the time stamp closest to the source, introducing a relatively fixed and small additional delay. The edge of the PPS signal arriving at the SOC has a direct and fixed time relationship with the edge of the original GPS PPS signal.

Method 2: MCU generates PPS signal

In this method, the MCU does not directly forward the PPS signal of the GPD. Instead, it uses the global time counter, which has been accurately synchronized and maintained through steps S221-S223, and the calculated second global timestamp (gtc_pps).

When the GTC count value of the MCU reaches a precise time instant corresponding to a next UTC integer second (for example, equal to gtc_pps+1,000,000,000 nanoseconds, or some future accurate time point calculated based on gtc_pps), the hardware timer module automatically drives a GPIO pin configured in output mode to generate a pulse edge. This pin is also connected to a GPIO pin of the SOC configured in input mode.

This method can generate signals with less jitter and is not directly affected by the quality of the original PPS signal of the GPS. The MCU can control signal characteristics (such as pulse width) more flexibly.

Whether it adopts a relay method or a generation method, ultimately, a physical signal with its predetermined edge highly synchronized in time with the accurate time reference of the MCU will be stably transmitted to the pin of the SOC. This physical signal edge arriving at the SOC will serve as a triggering event for the SOC to subsequently perform its local high-precision timestamp capture and delay compensation.

3. SOC performs local high-precision timestamp capture and delay compensation:

SOC internally performs steps similar to those on the MCU side (S221-S223), but uses its own hardware resources and time reference:

Step S221': The SOC configures the GPIO pin receiving the synchronization physical signal to enable a hardware timestamp capture function. When the predetermined edge of the synchronization signal arrives at the GPIO pin of the SOC (t1_soc), the current count value of the SOC's local high-precision hardware timer is automatically latched by hardware, obtaining the first local timestamp of the SOC (tcar_soc).

Step S222': The edge of this synchronization signal simultaneously triggers an interrupt request within the SOC. The SOC responds to the interrupt and starts executing the corresponding ISR at a later time instant t2_soc. In the ISR, the software reads the current value of the local hardware timer of the SOC to obtain the second local timestamp of the SOC (tcrr_soc), and reads the current value of its maintained global time counter of the SOC (GTC_soc) to obtain the first global timestamp of the SOC (gtc_isr_now_soc).

Step S223': The SOC calculates its local interrupt delay diff_t_soc = tcrr_soc - tcar_soc. Then, it calculates the SOC global timestamp gtc_sync_event_soc = gtc_isr_now_soc - diff_t_soc, which corresponds accurately to the edge event t1_soc of the synchronization signal.

4. Alignment between SOC internal time reference and MCU time reference:

SOC now possesses the following information: utc_s and gtc_pps received from MCU via Ethernet. The synchronization signal edge timestamp measured locally with accuracy is gtc_sync_event_soc.

The time synchronization software module of the SOC uses the information to calibrate or adjust the global time counter of the SOC (GTC_soc), ensuring it remains synchronized with the time reference of the MCU (ultimately with UTC). Specific alignment methods may include:

Offset calibration: The SOC is aware that the edge of the received synchronization signal should theoretically correspond to (or be relative to) the gtc_pps value sent by the MCU. By comparing gtc_sync_event_soc with this theoretical value, a current offset of the SOC clock relative to the MCU clock can be calculated, and based on this, the count value of GTC_soc can be adjusted or a compensating offset can be set.

According to the solution of the embodiments of the present application, through the aforementioned steps, the SOC in the high-performance computing domain can utilize the MCU in the safety domain as its trusted time synchronization reference. It combines absolute time information (utc_s, gtc_pps) transmitted via Ethernet and an accurate physical synchronization event marker obtained through GPIO, and uses local hardware timestamp capture and delay compensation techniques to achieve high-accuracy alignment between its own time reference and the MCU time reference. This method avoids configuring a separate GPS receiver or external clock source for the SOC, simplifies the system hardware design, and ensures internal time consistency and high precision across the entire intelligent driving system, including the safety domain and the high-performance computing domain.

In a possible implementation, the method further comprises the following steps:

sending the second-level universal time and the second global timestamp to other processing cores in a micro-controller domain by inter-process communication.

In the embodiments of the present disclosure, after the main processing core (e.g., MCU core 1 directly connected to GPS) calculates latest second-level universal time and the second global timestamp, the core uses the Inter-Process Communication (IPC) mechanism provided internally by the microcontroller to transmit the two key time information to other slave processing cores on a same MCU chip. The IPC mechanism may include, but is not limited to, writing utc_s and gtc_pps to a shared memory area accessible to all cores, or sending notifications or data packets containing the time information through a software message queue.

According to the solution in the embodiments of the present disclosure, precise time reference information (utc_s and gtc_pps) is shared through inter-process communication, ensuring that all processing cores within the same safety domain microcontroller can access a unified, high-precision time view that is synchronized with the external UTC. This avoids the complexity and potential inconsistencies of independent time synchronization for each core, which is crucial for executing tasks that require coordination and precise timestamps in a multi-core environment, ensuring time determinism for operations within the safety domain.

In order to further enhance the precision of sub-second timing, especially in scenarios where the frequency of the local clock crystal oscillator drifts due to temperature variations, in an embodiment of the present disclosure, the step S230 of based on a global timestamp of a current time instant and the second global timestamp, obtaining a sub-second time of the current time instant, further comprises the following steps:

S231: based on a time interval between a global timestamp corresponding to a pulse signal of a Nth second and a global timestamp corresponding to a pulse signal of a N-1th second, determining a correction factor;

S322: based on a global timestamp of a current time instant, the second global timestamp and the correction factor, obtaining a sub-second time of the current time instant, wherein the current time instant is within the Nth second.

In an embodiment of the present disclosure, after the processing unit (such as MCU core 1) successfully calculates a second global timestamp gtc_pps(N) corresponding to a current Nth Pulse Per Second signal, it reads a stored second global timestamp gtc_pps(N-1) corresponding to a previous (N-1th second) pulse signal (the acquisition method of this value will be detailed later). Subsequently, the actual time interval delta_gtc=gtc_pps(N)-gtc_pps(N-1) between the global timestamps of these two consecutive integer-second time instants is calculated. This delta_gtc value represents the actual number of nanoseconds counted by the high-precision global time counter driven by a local crystal oscillator within the most recently elapsed nominal second. Ideally, this value should be 1,000,000,000 ns. By comparing the actual interval with the ideal interval, a correction factor fk for compensating frequency deviation can be calculated, with the formula fk=1000000000.0/delta_gtc. The calculated fk value will be stored for use in the sub-second time calculation for the next time period (i.e., within the Nth second).

In the embodiment of the present disclosure, during the time period of the Nth second (i.e., from the arrival of the PPS pulse signal at the Nth second to just before the arrival of the PPS pulse signal at the N+1th second), for any current time instant, the processing unit first reads the global timestamp gtc_now at the current time instant. Then, it calculates an original time difference of the current time instant relative to the start time instant of the current second. Finally, this original time difference is multiplied by the correction factor fk calculated in step S231 based on the previous time interval, to obtain the final, compensated sub-second time at the current time instant.

According to the solution of the embodiments of the present disclosure, by calculating the actual count value of the local clock between two consecutive precise integer-second time instant, an average deviation of the local crystal oscillator frequency relative to a standard frequency (including deviations caused by factors such as temperature drift) during the previous second time period can be quantitatively measured. This deviation can be used to predict and compensate for similar frequency deviations that would occur in the next second, thereby improving the accuracy of sub-second time measurement. Applying the calculated correction factor fk to the time calculation within the current second is equivalent to dynamically scaling and adjusting the original time interval measured by the local clock. If the local clock was faster in the previous second (fk<1), the current sub-second time interval will be correspondingly shortened; if the local clock was slower in the previous second (fk>1), the current sub-second time interval will be correspondingly lengthened. This compensation mechanism effectively offsets the impact of the frequency drift of the local clock on the cumulative error of sub-second time, making the final obtained sub-second time utc_ns closer to the actual UTC time elapse, thus significantly improving the time synchronization accuracy across the entire operating temperature range.

In a possible implementation, the global timestamp corresponding to the Pulse Per Second signal at the (N-1)th second is obtained by storing the second global timestamp calculated at the (N-1)th second.

In an embodiment of the present disclosure, the processing unit maintains a dedicated variable or memory location (denoted as gtc_pps_pre, for example) internally. During each time synchronization cycle, after step S223 calculates the second global timestamp gtc_pps(N) corresponding to the current second (e.g., the Nth second), the value of gtc_pps(N) is saved to the gtc_pps_pre storage unit, overwriting the value stored earlier (in the (N-1)th second). Therefore, when the program needs to use the "global timestamp corresponding to the Pulse Per Second signal of the Nth second" in step S231 at the beginning of a next time synchronization cycle (processing the PPS signal of the (N+1)th second), it will read the value from the gtc_pps_pre storage unit, which is precisely the gtc_pps(N) calculated and stored in a previous cycle (the Nth second).

According to the solution of the embodiments of the present disclosure, through the mechanism of periodic calculation, storage and reading, it can reliably obtain global timestamps for two consecutive exact integer-second time instants, and further determine the correction factor fk based on the time interval therebetween, enabling the implementation of a temperature drift correction algorithm that performs predictive compensation based on historical measurement data.

In a possible implementation, time shorter than a UTC second is taken by a local clock. Due to the physical characteristics of crystal oscillator temperature drift, there is a deviation between the crystal oscillator frequency and the standard frequency as the temperature changes. Generally, at 25 degrees Celsius, the crystal oscillator frequency is the same as the standard frequency. The greater the increase or decrease in crystal oscillator temperature, the greater the deviation from the standard frequency. Considering cost issues, crystal oscillators with an error of 50 ppm are generally chosen, meaning that the maximum deviation of the crystal oscillator within 1 second over the full temperature operating range is within 50 microseconds.

By introducing the crystal oscillator temperature drift correction factor fk, Formula 1 is obtained, and the UTC time of the crystal oscillator is obtained after correction with the correction factor fk. The correction factor fk is calculated using Formula 2, where gtc_pps represents the global timestamp of a current UTC integer second, measured in nanoseconds (nS), and gtc_pps_pre represents the global timestamp of a previous integer second, also measured in nanoseconds. Since temperature changes linearly and slowly, the deviation of the crystal oscillator frequency in a previous second can be used to predict the deviation of the crystal oscillator frequency in a next second. When the temperature remains constant, the deviation remains unchanged, that is, fk remains unchanged.

$$utc\_ns = (gtc\_now - gtc\_pps) * fk \qquad \text{Formula 1}$$

$$fk = 1000000000.0 / (gtc\_pps - gtc\_pps\_pre) \qquad \text{Formula 2}$$

The maximum deviation within an integer second refers to a change difference in crystal oscillator frequency per second. Assuming a change of 1ppm in crystal oscillator frequency per second, the error in time synchronization within an integer second is 1uS. When the temperature remains constant and the frequency tends to be stable, the error is much smaller than 1uS.

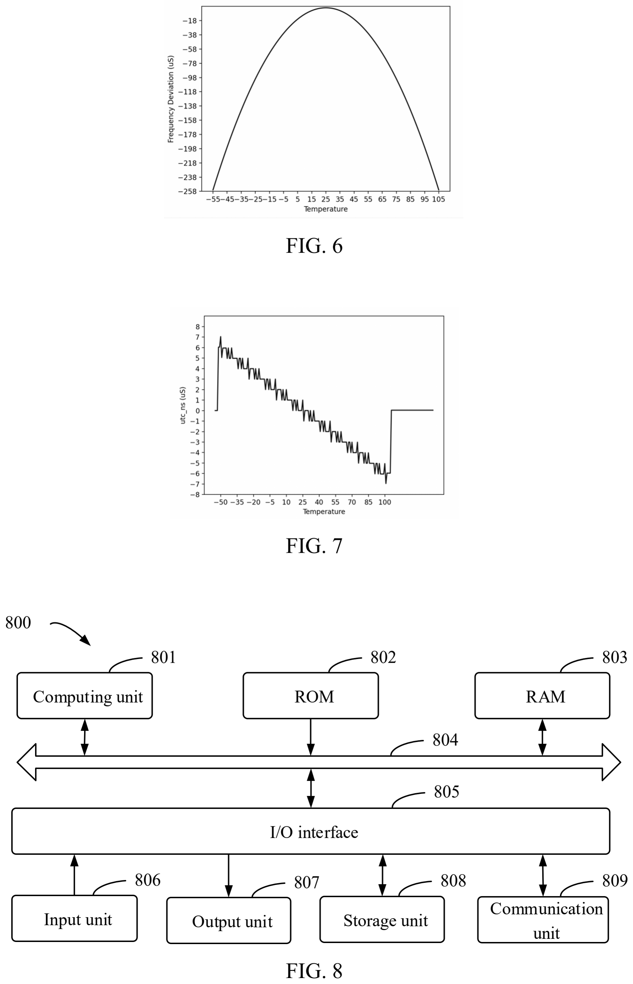

To better understand the solution, an example is illustrated below. Assume that the temperature drift relationship of the crystal oscillator is as shown in Formula 3, where f0 = 200MHz, t0 = 25°C, and k = 0.04ppm/°C. The frequency deviation between -55°C and 105°C is shown in FIG. 6, where the horizontal axis represents temperature and the vertical axis represents frequency deviation, with units of uS.

$$f = f0 * (1 - k * (t-t0)*(t-t0)) \qquad \text{Formula 3}$$

When the crystal oscillator temperature changes from -55°C to 105°C at a rate of 1°C per second, according to Formula 3, when t is at -55°C or 105°C, the maximum frequency deviation is f = f0 * (1 - 256*10-6), and the absolute value of the frequency deviation abs(f-f0) is 256uS. The frequency deviation of the crystal oscillator from -55°C to 105°C is shown in FIG. 6. Therefore, without introducing a temperature correction factor fk, the maximum deviation adjusted per second, that is, the maximum deviation of the crystal oscillator frequency, is 256uS.

After introducing the temperature correction factor, the deviation adjusted per second represents a frequency variation difference caused by temperature change of the crystal oscillator per second. Assuming a temperature change of 1 degree per second for the crystal oscillator, when t changes from 104°C to 105°C, the frequencies obtained from formula 3 are as follows:

$$f1 = f0 * (1 - 0.04*10-6 *(104-25)*(104-25)) \qquad \text{Formula 4}$$

$$f2 = f0 * (1 - 0.04*10-6 *(105-25)*(105-25)) \qquad \text{Formula 5}$$

Based on Formula 4 and Formula 5, the frequency error is 6.36uS, indicating a maximum frequency variation of 6.36uS per second for the crystal oscillator. After incorporating the temperature correction factor, the maximum deviation of utc_nc from -55°C to 105°C is shown in FIG. 7. The maximum deviation of utc_ns is less than $\pm$8uS, significantly reducing the frequency adjustment error.

When the temperature drift of the crystal oscillator is within 50ppm, the deviation of utc_nc over the full temperature range is less than $\pm$2uS, greatly improving the precision of the time synchronization module in the intelligent driving system. In this way, a lower-cost crystal oscillator can achieve the accuracy of a higher-cost one.

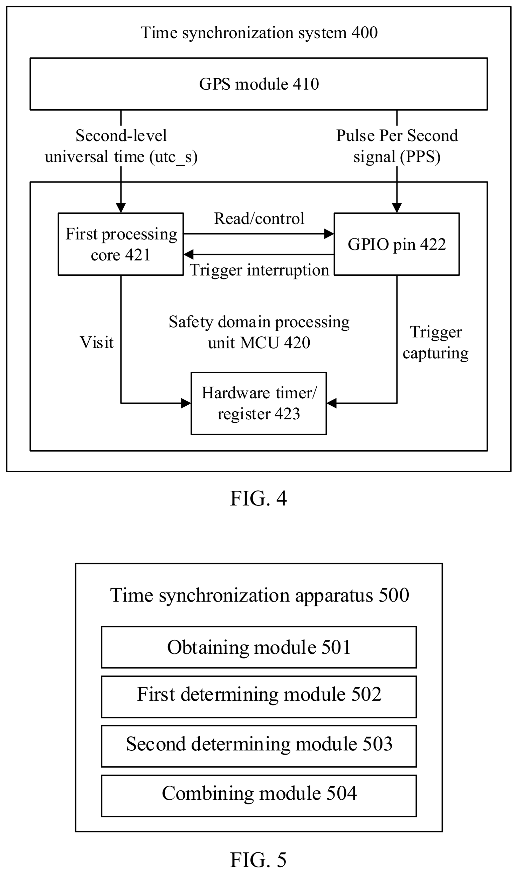

FIG. 4 is a schematic structural diagram of a time synchronization system of an intelligent driving system provided by an embodiment of the present disclosure. As shown in FIG. 4, the system at least comprises:

a GPS module 410, configured to output a second-level universal time and a Pulse Per Second signal;

at least a safety domain processing unit 420, comprising:

a first processing core 421 in communication with the GPS module, configured to receive the second-level universal time and the Pulse Per Second signal;

a GPIO pin associated with the first processing core, configured to have a hardware timestamp capturing function;

a hardware timer/register associated with the GPIO pin, configured to capture a first local timestamp at a predetermined edge of the Pulse Per Second signal.

The first processing core is configured to perform the time synchronization method provided by any of the embodiments of the present disclosure, to generate an accurate second global timestamp and/or accurate time.

In an embodiment of the present, the system at least comprises a GPS module 410 and at least one safety domain processing unit 420.

The GPS module 410 serves as a main external clock source of the system, and its function has been described in the aforementioned embodiments (for example, refer to the mechanism section on the mechanism of generation and output of GPS module time information). In brief, the GPS module 410 is configured to: output data packets/messages containing second-level world time (utc_s) through a serial interface 411 (e.g., UART).

A Pulse Per Second signal (PPS) that is accurately aligned with a UTC integer second time instant is output through a Pulse Per Second signal interface 412 (such as a PPS signal output pin).

The safety domain processing unit 420 is typically a microcontroller (MCU) compliant with automotive safety integrity levels, such as ASIL D. It is responsible for executing critical safety-related tasks and plays a central role in the time synchronization solution of the present invention. The safety domain processing unit 420 comprises at least the following components:

a first processing core 421 (e.g., MCU core 1): This is the primary core designated for processing time synchronization within the security domain processing unit 420. The first processing core 421 communicates with the GPS module 410 through its internal bus and peripheral interfaces. Specifically: through a serial communication controller connected to the serial interface 411, the first processing core receives and parses serial data packets/message containing utc_s output by the GPS module 410.

The first processing core receives the Pulse Per Second signal output by the GPS module 410 through a GPIO pin 422 connected to the Pulse Per Second signal interface 412.

GPIO pin 422: a general-purpose input/output pin on the first processing core 421 (or MCU to which it belongs), physically connected to the pulse signal interface 412 of the GPS module 410. The GPIO pin 422 is configured by software as an input mode and its hardware timestamp capture function is enabled. This means that the pin is associated with specific hardware logic inside the MCU and can automatically respond to edge changes in the input signal.

Hardware timer/register 423: This is a hardware resource closely associated with the hardware timestamp capture function of the GPIO pin 422. It typically includes:

a high-precision local hardware timer (not separately shown, which may be global within the MCU or private to the timer module) driven by a local crystal oscillator of the MCU and continuously counting.

a capture register (which is either contained within or included in the hardware timer/register 423). When the GPIO pin 422 detects a predetermined edge (e.g., a rising edge, at time instant t1) of a preconfigured Pulse Per Second signal, the hardware logic will automatically latch a current count value of the aforementioned local hardware timer into the capture register. The latched value represents the first local timestamp (tcar).

Function execution of the first processing core 421: In addition to receiving the GPS signal, the first processing core 421 is configured to perform main computational steps of the time synchronization method described in any embodiment of the present disclosure. Specifically, it includes:

responding to an interrupt request triggered by the edge of the Pulse Per Second signal on the GPIO pin 422.

in an interrupt service routine (ISR), reading the current local timer value to obtain the second local timestamp (tcrr), and reading the system-maintained global time counter (GTC) to obtain the first global timestamp (gtc_isr_now).

calculating a time difference diff_t = tcrr - tcar, and based on gtc_isr_now and diff_t, calculating an accurate second global timestamp (gtc_pps), which corresponds to the predetermined edge time instant t1 of the Pulse Per Second signal.

calculating a sub-second time (utc_ns) at a current time instant.

combining the obtained utc_s and the calculated utc_ns to generate a final accurate time (UTC).

Through the provision of raw time and an accurate physical Pulse Per Second signal by the GPS module 410, as well as the collaborative work of the first processing core 421 within the safety domain processing unit 420, the GPIO pin 422 equipped with a hardware timestamp function, and the associated hardware timer/register 423, the system shown in the present embodiment can effectively implement the time synchronization method described in the present invention, generate and maintain a high-accuracy time reference synchronized with UTC, for use by various applications within the intelligent driving system.

In a possible implementation, the system further comprises:

at least a computing domain processing unit, configured to communicate with the safety domain processing unit.

The computing domain processing unit obtains time synchronization information from the safety domain processing unit and synchronizes local time based on the time synchronization information.

In a possible implementation, the computing domain processing unit obtains the time synchronization information from the safety domain processing unit by means of an Ethernet interface.

In a possible implementation, the safety domain processing unit comprises a plurality of micro-controller processing cores, the first processing core shares the second-level universal time and/or the second global timestamp with other processing cores in the MCU by means of inter-process communication.

For the specific functions and examples of each module and sub-module in the system of the embodiments of the present disclosure, reference can be made to the relevant descriptions of the corresponding steps in the above method embodiments, which will not be elaborated here.

FIG. 5 is a schematic structural diagram of a time synchronization apparatus according to an embodiment of the present disclosure. As shown in FIG. 5, the apparatus 500 comprises:

an obtaining module 501, configured to obtain a second-level universal time and a corresponding Pulse Per Second signal.

a first determining module 502, configured to, based on a first local timestamp of a captured Pulse Per Second signal, a second local timestamp of an execution time instant of an interrupt service routine, and a first global timestamp, determine a second global timestamp corresponding to a predetermined edge of the Pulse Per Second signal. The interrupt service routine is triggered by the Pulse Per Second signal.

a second determining module 503, configured to, based on a global timestamp of a current time instant and the second global timestamp, obtain a sub-second time of the current time instant.

a combining module 504, configured to, based on the second-level universal time and the sub-second time, obtain a precise time of the current time instant.

In a possible implementation, the obtaining module 501 is configured to:

obtain a serial data packet/message by means of a serial interface connected to a clock source, the serial data packet/message containing the second-level universal time;

obtaining a Pulse Per Second signal by means of a GPIO pin connected to the clock source.

In a possible implementation, the first determining module 502 is configured to:

based on a count value of a local counter at the time of a predetermined edge of the captured Pulse Per Second signal, obtaining the first local timestamp;

based on an execution time instant of an interrupt service routine triggered by the Pulse Per Second signal, obtaining the second local timestamp and the first global timestamp;

based on a time difference between the first global timestamp and the first local timestamp, and the second local timestamp, determining the second global timestamp corresponding to the predetermined edge of the Pulse Per Second signal.

In a possible implementation, the first determining module 502 is configured to:

based on a difference between the first local timestamp and the second local timestamp, obtaining a time difference;

obtaining a second global timestamp corresponding to the predetermined edge of the Pulse Per Second signal by deducting the time difference from the first global time stamp.

In a possible implementation, the second-level universal time and the second global timestamp are updated upon arrival of each Pulse Per Second signal.

In a possible implementation, the predetermined edge of the Pulse Per Second signal is a rising edge.

In a possible implementation, the first local timestamp, the second local timestamp, the first global timestamp, the second global timestamp, the global timestamp of the current time instant, and the sub-second time have a time unit in nano seconds.

In a possible implementation, the clock source is a GPS module or a micro-controller.

In a possible implementation, the system further comprises:
a synchronization module, configured to send the second-level universal time and the second global timestamp to other processing cores in a micro-controller domain by inter-process communication.

In a possible implementation, the second determining module 503 is configured to:

based on a time interval between a global timestamp corresponding to a pulse signal of a Nth second and a global timestamp corresponding to a pulse signal of a N-1th second, determining a correction factor;

based on a global timestamp of a current time instant, the second global timestamp and the correction factor, obtaining a sub-second time of the current time instant, wherein the current time instant is within the Nth second.

In a possible implementation, the second determining module 503 is configured to:
the global timestamp corresponding to a pulse signal of a N-1th second being obtained by saving a second global timestamp calculated for the N-1th second.

For detailed descriptions of the specific functions and examples of each module and sub-module in the apparatus of this disclosed embodiment, reference can be made to the relevant descriptions of the corresponding steps in the above method embodiments, which will not be elaborated here.

In the technical solution of the present disclosure, the acquisition, storage, and application of user personal information involved are all in compliance with relevant laws and regulations, and do not violate public order and good customs.

According to an embodiment of the present disclosure, the present disclosure further provides an electronic device, a readable storage medium, and a computer program product.

FIG. 8 is a block diagram of an exemplary electronic device 800 that can be used to implement the embodiments of the present disclosure. Electronic devices are intended to represent various forms of digital computers, such as laptops, desktops, workstations, personal digital assistants, servers, blade servers, mainframe computers, and other suitable computers. Electronic devices can also represent various forms of mobile devices, such as personal digital assistants, cellular phones, smart phones, wearable devices, and other similar computing devices. The components shown in herein, their connections and relationships, and their functions are merely exemplary and are not intended to limit the implementations of the present disclosure described and/or claimed herein.

As shown in FIG. 8, the device 800 comprises a computing unit 801, which can perform various appropriate actions and processes based on computer programs stored in a read-only memory (ROM) 802 or computer programs loaded from a storage unit 808 into a random access memory (RAM) 803. Various programs and data required for the operation of the device 800 can also be stored in the RAM 803. The computing unit 801, ROM 802, and RAM 803 are connected to each other via a bus 804. An input/output (I/O) interface 805 is also connected to the bus 804.

Multiple components in the device 800 are connected to the I/O interface 805, including: an input unit 806, such as a keyboard, mouse, and the like; an output unit 807, such as various types of displays, speakers, and the like; a storage unit 808, such as disks, CDs, and the like; and a communication unit 809, such as a network card, modem, wireless communication transceiver, and the like. The communication unit 809 allows the device 800 to exchange information/data with other devices through computer networks such as the Internet and/or various telecommunication networks.

The computing unit 801 can be various general-purpose and/or dedicated processing components with processing and computing capabilities. Some examples of the computing unit 801 include, but are not limited to, a central processing unit (CPU), a graphics processing unit (GPU), various dedicated artificial intelligence (AI) computing chips, various computing units running machine learning model algorithms, a digital signal processor (DSP), and any suitable processor, controller, microcontroller, and the like. The computing unit 801 executes the various methods and processes described above, such as the time synchronization method. For example, in some embodiments, the time synchronization method can be implemented as a computer software program tangibly embodied in a machine-readable medium, such as the storage unit 808. In some embodiments, some or all of the computer program can be loaded and/or installed onto the device 800 via the ROM 802 and/or the communication unit 809. When the computer program is loaded into the RAM 803 and executed by the computing unit 801, one or more steps of the time synchronization method described above can be executed. Alternatively, in other embodiments, the computing unit 801 can be configured to perform the time synchronization method in any other suitable manner (e.g., by means of firmware).

The various implementation of the systems and techniques described herein can be implemented in digital electronic circuitry systems, integrated circuit systems, field programmable gate arrays (FPGAs), application-specific integrated circuits (ASICs), application-specific standard products (ASSPs), system-on-chip (SOC) systems, complex programmable logic devices (CPLDs), computer hardware, firmware, software, and/or combinations thereof. These various implementation may include: implementation in one or more computer programs that can be executed and/or interpreted on a programmable system comprising at least one programmable processor, which may be a dedicated or general-purpose programmable processor, capable of receiving data and instructions from a storage system, at least one input device, and at least one output device, and transmitting data and instructions to the storage system, the at least one input device, and the at least one output device.

The program code for implementing the methods of the present disclosure can be written in any combination of one or more programming languages. The program code can be provided to processors or controllers of general-purpose computers, dedicated computers, or other programmable data processing devices, such that when executed by the processor or controller, the program code implements the functions/operations specified in the flowcharts and/or block diagrams. The program code can be executed entirely on the machine, partially on the machine, partially on the machine as an independent software package and partially on a remote machine, or entirely on a remote machine or server.

In the context of the present disclosure, a machine-readable medium can be a tangible medium that can contain or store a program for use by or in connection with an instruction execution system, apparatus, or device. The machine-readable medium can be a machine-readable signal medium or a machine-readable storage medium. Examples of machine-readable media include, but are not limited to, electronic, magnetic, optical, electromagnetic, infrared, or semiconductor systems, apparatuses, or devices, or any suitable combination of the foregoing. More specific examples of machine-readable storage media include electrical connections based on one or more wires, portable computer disks, hard disks, random access memory (RAM), read-only memory (ROM), erasable programmable read-only memory (EPROM or flash memory), optical fibers, compact disc read-only memory (CD-ROM), optical storage devices, magnetic storage devices, or any suitable combination of the foregoing.

In order to provide interaction with the user, the systems and technologies described herein can be implemented on a computer that has: a display apparatus for displaying information to the user (e.g., a cathode ray tube (CRT) or a liquid crystal display (LCD) monitor)); and a keyboard and a pointing device (e.g., a mouse or a trackball) through which the user can provide input to the computer. Other types of devices may also be used to provide interaction with the user. For example, feedback provided to the user can be any form of sensory feedback (e.g., visual feedback, auditory feedback, or tactile feedback); and it is capable of receiving input from the user in any form (including acoustic input, voice input, or tactile input).

The systems and technologies described herein can be implemented in a computing system that includes back-end components (e.g., as a data server), a computing system that includes middleware components (e.g., as an application server), a computing system that includes front-end components (e.g., as a user computer with a graphical user interface or web browser through which the user can interact with the implementation of the systems and technologies described herein), or a computing system that includes any combination of the back-end components, middleware components, or front-end components. The components of the system can be connected to each other through any form or kind of digital data communication (e.g., a communication network). Examples of the communication network include a local area network (LAN), a wide area network (WAN), and the Internet.

A computer system may include a client and a server. The client and server are generally far away from each other and usually interact through a communication network. The relationship between the client and the server is established through computer programs running on corresponding computers and having a client-server relationship with each other. The server can be a cloud server, a server in a distributed system, or a server combined with blockchain.

It should be understood that various forms of processes shown above can be used to reorder, add or delete steps. For example, steps described in the present disclosure can be executed in parallel, sequentially, or in a different order, as long as the desired result of the technical solution disclosed in the present disclosure can be achieved, and this is not limited herein.

The foregoing specific implementations do not constitute a limitation on the protection scope of the present disclosure. Those of ordinary skill in the art should understand that various modifications, combinations, sub-combinations and substitutions can be made according to design requirements and other factors. Any modification, equivalent replacement and improvement made within the principle of the present disclosure shall be included in the protection scope of the present disclosure.

**Claims**

1. A time synchronization method, comprising:

   obtaining (S210) a second-level universal time and a corresponding Pulse Per Second signal;
   based on a first local timestamp of a captured Pulse Per Second signal, a second local timestamp of an execution time instant of an interrupt service routine, and a first global timestamp, determining (S220) a second global timestamp corresponding to a predetermined edge of the Pulse Per Second signal, wherein the interrupt service routine is triggered by the Pulse Per Second signal;
   based on a global timestamp of a current time instant and the second global timestamp, obtaining (S230) a sub-second time of the current time instant;
   based on the second-level universal time and the sub-second time, obtaining (S240) an accurate time of the current time instant.

2. The method according to claim 1, wherein, the obtaining a second-level universal time and a corresponding Pulse Per Second signal, comprises:

   obtaining a serial data packet/message by means of a serial interface connected to a clock source, the serial data packet/message containing the second-level universal time;
   obtaining a Pulse Per Second signal by means of a GPIO pin connected to the clock source.

3. The method according to claim 1, wherein, the based on a first local timestamp of a captured Pulse Per Second signal, a second local timestamp of an execution time instant of an interrupt service routine, and a first global timestamp, determining a second global timestamp corresponding to a predetermined edge of the Pulse Per Second signal, comprises:

   based on a count value of a local counter at the time of a predetermined edge of the captured Pulse Per Second signal, obtaining the first local timestamp;
   based on an execution time instant of an interrupt service routine triggered by the Pulse Per Second signal, obtaining the second local timestamp and the first global timestamp;
   based on a time difference between the first global timestamp and the first local timestamp, and the second local timestamp, determining the second global timestamp corresponding to the predetermined edge of the Pulse Per Second signal.

4. The method according to claim 3, wherein, the based on a time difference between the first global timestamp and the first local timestamp, and the second local timestamp, determining a second global timestamp corresponding to the predetermined edge of the Pulse Per Second signal, comprises:

   based on a difference between the first local timestamp and the second local timestamp, obtaining a time difference;
   obtaining a second global timestamp corresponding to the predetermined edge of the Pulse Per Second signal by deducting the time difference from the first global time stamp.

5. The method according to claim 1, wherein, the second-level universal time and the second global timestamp are updated upon arrival of each Pulse Per Second signal.

6. The method according to claim 1, wherein, the predetermined edge of the Pulse Per Second signal is a rising edge.

7. The method according to claim 1, wherein, the first local timestamp, the second local timestamp, the first global timestamp, the second global timestamp, the global timestamp of the current time instant, and the sub-second time have a time unit in nano seconds.

8. The method according to claim 2, wherein, the clock source is a GPS module or a micro-controller.

9. The method according to claim 2, further comprising:

sending the second-level universal time and the second global timestamp to other processing cores in a micro-controller domain by inter-process communication.

10. The method according to claim 1, wherein, the based on a global timestamp of a current time instant and the second global timestamp, obtaining a sub-second time of the current time instant, comprises:

based on a time interval between a global timestamp corresponding to a pulse signal of a Nth second and a global timestamp corresponding to a pulse signal of a N-1th second, determining a correction factor;

based on a global timestamp of a current time instant, the second global timestamp and the correction factor, obtaining a sub-second time of the current time instant, wherein the current time instant is within the Nth second;

wherein, the global timestamp corresponding to a pulse signal of a N-1th second is obtained by saving a second global timestamp calculated for the N-1th second.

11. A time synchronization system (400) for an intelligent driving system, comprising:

a GPS module (410), configured to output a second-level universal time and a Pulse Per Second signal;

at least a safety domain processing unit (420), comprising:

a first processing core (421) in communication with the GPS module, configured to receive the second-level universal time and the Pulse Per Second signal;

a GPIO pin (422) associated with the first processing core, configured to have a hardware timestamp capturing function;

a hardware timer/register (423) associated with the GPIO pin, configured to capture a first local timestamp at a predetermined edge of the Pulse Per Second signal;

the first processing core being configured to perform the method according to any one of claims 1 to 10 to generate an accurate second global timestamp and/or accurate time.

12. The system according to claim 11, further comprising:

at least a computing domain processing unit, configured to communicate with the safety domain processing unit;

the computing domain processing unit obtaining time synchronization information from the safety domain processing unit and synchronizing local time based on the time synchronization information.

13. The system according to claim 12, wherein, the computing domain processing unit obtains the time synchronization information from the safety domain processing unit by means of an Ethernet interface.

14. The system according to claim 11, wherein the safety domain processing unit comprises a plurality of micro-controller processing cores, the first processing core shares the second-level universal time and/or the second global timestamp with other processing cores in the MCU by means of inter-process communication.

15. A time synchronization apparatus (500), comprising:

an obtaining module (501), configured to obtain a second-level universal time and a corresponding Pulse Per Second signal;

a first determining module (502), configured to, based on a first local timestamp of a captured Pulse Per Second signal, a second local timestamp of an execution time instant of an interrupt service routine, and a first global timestamp, determine a second global timestamp corresponding to a predetermined edge of the Pulse Per Second signal, wherein the interrupt service routine is triggered by the Pulse Per Second signal;

a second determining module (503), configured to, based on a global timestamp of a current time instant and the second global timestamp, obtain a sub-second time of the current time instant;

a combining module (504), configured to, based on the second-level universal time and the sub-second time, obtain an accurate time of the current time instant.

FIG. 1

EP 4 668 048 A2

S210

| Obtaining a second-level universal time and a corresponding Pulse Per Second signal |

S220

| Based on a first local timestamp of a captured Pulse Per Second signal, a second local timestamp of an execution time instant of an interrupt service routine, and a first global timestamp, determining a second global timestamp corresponding to a predetermined edge of the Pulse Per Second signal |

S230

| Based on a global timestamp of a current time instant and the second global timestamp, obtaining a sub-second time of the current time instant |

S240

| Based on the second-level universal time and the sub-second time, obtaining an accurate time of the current time instant |

FIG. 2

PPS pulse time instant t1

ISR interrupt service routine time instant t2

PPS pulse interrupt time delay diff_t

FIG. 3

Time synchronization system 400

GPS module 410

Second-level universal time (utc_s)

Pulse Per Second signal (PPS)

First processing core 421

Read/control

GPIO pin 422

Trigger interruption

Safety domain processing unit MCU 420

Visit

Trigger capturing

Hardware timer/ register 423

FIG. 4

Time synchronization apparatus 500

Obtaining module 501

First determining module 502

Second determining module 503

Combining module 504

FIG. 5

FIG. 6

FIG. 7

FIG. 8